# EUROPEAN PATENT APPLICATION

(11) **EP 3 273 726 A1**
(43) Date of publication of application: **24.01.2018**
(21) Application number: 16305951.2
(22) Date of filing: 22.07.2016
(51) Int. Cl.: H04W 48/16, H04W 16/14, H04W 84/12

(54) **WLAN OPERATING CHANNEL CONFIGURING METHOD AND CORRESPONDING COMMUNICATION NETWORK DEVICE, SYSTEM, COMPUTER READABLE PROGRAM PRODUCT AND COMPUTER READABLE STORAGE MEDIUM**

(71) Applicant: Thomson Licensing, 92130 Issy-les-Moulineaux (FR)
(72) Inventor: JEANNE, Ludovic, 35576 Cesson-Sévigné (FR); STEYER, Jean-Marie, 35576 Cesson Sévigné (FR); BARON, Francois, 35576 Cesson Sévigné (FR); VAN OOST, Koen, 35576 Cesson Sévigné (FR)
(74) Representative: Tarquis-Guillou, Anne

(57) **Abstract**

A method for configuring a WLAN (Wireless Local Area Network) access point adapted to use at least one operational frequency channel to transmit or receive data when the access point is in an operational mode, the configuring comprising:
- checking an availability of at least one restricted frequency channel, a use of said restricted frequency channel being restricted by said actual availability;
- choosing the operational frequency channel from a set of frequency channels according to said checked availability;
- a first configuring comprising a first checking of restricted frequency channels belonging to a first proper sub-set of said set being performed before entering into the operational mode

- According to an embodiment, at least one second checking of at least one restricted frequency channel of said set, that has not been checked as available, is performed after said first configuring.

Typically, the WLAN AP is attempting to operate in a 5 GHz channel, which is usually restricted for RADAR applications, and before such operation the AP shall scan the channel and verify that it is not in use, and thus available.

## Description

### 1. Technical field

The present disclosure relates to the field of wireless communication network devices, and to their configuration.

A configuring method and corresponding communication network device, system, computer readable program product and computer readable storage medium are described.

### 2. Background art

Many devices, like a Set Top Box (STB), integrate more and more dual band non concurrent interfaces that act each as an Access Point (AP). Such a device can operate in several frequency bands, like in the 2.4 GHz frequency band and in the 5 GHz frequency band.

Many wireless devices operate in the 2.4 GHz frequency band rather than in the 5 GHz frequency band. Indeed, even though the 5 GHz frequency band extends the available spectrum, and provides the right to transmit more power for a better Wi-Fi coverage, the use of some channels of the 5 GHz frequency band may be restricted by some regulatory constraints, that specify that a frequency channel used by a radar (like a weather radar or a military radar notably) must not be used by another device.

In such a case, a Dynamic Frequency Selection (DFS) algorithm must be used by a device. According to the DFS mechanism, before using a candidate restricted frequency channel (also called hereinafter a DFS channel), an access point (AP) has to make sure that the candidate channel is not used by a radar (this checking is also called by the one skilled in the art as "clearing" the frequency). The operation consists in listening on the DFS channel, without transmitting, during a minimum of time for detecting the presence or not of a radar. Furthermore, a device has to stop transmitting and to leave the DFS channel it is using during certain time intervals (like 1 second for stopping transmitting and 10 s for leaving the channel), when a radar is detected.

The DFS specifies time requirements like a minimum scanning (or listening) time before using a DFS channel and a minimum time without using a DFS channel again once a radar has been detected in this DFS channel. The specified time can vary based upon regulations and also upon the bands used.

According to European Regulation for instance, the minimum scanning time is specified as being a 1 minute duration per channel.

It is also to be noted that minimum scanning time requirements are given per channel. A wireless access point often uses a frequency band including several channels, thus the time spent on scanning can be obtained by multiplying the minimum scanning time by the number of channels. This introduces a delay that can be considered as a major inconvenient during the operating of a device having real time constraints, like a STB for instance. Thus some providers offers electronic components (like components with an Off Channel Access Control (OCAC) functionality) that permit to scan, or clear, a frequency in advance while the device is operating at another frequency. However, the use of this component has a significant impact on the Cost of Goods Sold (COGS) of an electronic product.

So, there's a need to provide a solution that improves, or at least preserve at least partially, the user experience of a user of a wireless communication device compared to prior art solutions while permitting to limit the COGS of a device.

### 3. Summary of the present disclosure.

The present principles enable at least one of the above disadvantages to be resolved by proposing a method for configuring an WLAN access point adapted to use at least one operational frequency channel to transmit or receive data when said access point is in an operational mode, said configuring comprising:
- checking an availability of at least one restricted frequency channel, a use of said restricted frequency channel being restricted by said availability;
- chosing said operational frequency channel from a set of frequency channels including said checked frequency channel, according to said checked availability;
a first configuring comprising a first checking of restricted frequency channel belonging to a first proper sub-set of said set being performed before entering into said operational mode.

According to at least one embodiment of the present disclosure, at least one second checking of at least one restricted frequency channel of said set, that has not been checked as available, is performed after said first configuring.

According to at least one embodiment of the present disclosure, said first configuring is performed during a firstboot of the access point in a location (or in other word the first configuring is performed the fist time the device boots in a given location).

According to at least one embodiment of the present disclosure, at least one of said second checking is performed for all not already checked frequency channels of said set.

According to at least one embodiment of the present disclosure, wherein a use of a restricted frequency channel checked as unusuable (or occupied) has to be left for a duration, at least one of said second checking is performed for all restricted frequency channels of said set which use is not forbidden at the time of said second checking.

According to at least one embodiment of the present disclosure, said method comprises storing localization information related to the current location of said WLAN access point at the time of said first and/or second checking.

According to at least one embodiment of the present disclosure, said first configuring is performed when a localization information deduced from a current location of the access point is different from said stored localization information.

According to at least one embodiment of the present disclosure, said method comprises storing a timestamp representative of the time of said first and/or said second checking when the checked frequency channel is not available.

According to at least one embodiment of the present disclosure, the chosing comprises varying a number of operational frequency channels according to said indication of availability.

According to another aspect, the present disclosure relates to a communication network device comprising at least one processor configuring an WLAN access point adapted to use at least one operational frequency channel to transmit or receive data when said access point is in an operational mode, said configuring comprising:
- checking an availability of at least one restricted frequency channel, a use of said restricted frequency channel being restricted by said availability;
- chosing said operational frequency channel from a set of frequency channels including said checked frequency channel, according to said checked availability;
a first configuring comprising a first checking of restricted frequency channels belonging to a first proper sub-set of said set being performed before entering into said operational mode;

According to at least one embodiment of the present disclosure, at least one second checking of at least one restricted frequency channel of said set, that has not been checked as available, is performed after said first configuring.

According to at least one embodiment of the present disclosure, said device comprises a memory zone adapted to store configuration data comprising an indication of availability of said checked frequency channel.

Said configuration data can be stored for instance in a persistent memory zone.

By persistent memoy zone, it is herein to be understand a non volatile memory zone, adapted to store data without any electrical power, being rewritable, like a Non-Volatile Random Access Memory (NVRAM).

According to at least one embodiment of the present disclosure, said configuration data is stored in a memory zone located in a device distinct from said communication network device.

According to another aspect, the present disclosure relates to a communication network system comprising a server and at least one communication network device, said at least one communication network device comprising at least one processor configuring an WLAN access point adapted to use at least one operational frequency channel to transmit or receive data when said access point is in an operational mode, said configuring comprising :
- checking an availability of at least one restricted frequency channel, a use of said restricted frequency channel being restricted by said availability;
- chosing said operational frequency channel from a set of frequency channels including said checked frequency channel, according to said checked availability;
a first configuring comprising a first checking of restricted frequency channels belonging to a first proper sub-set of said set being performed before entering into said operational mode.

According to at least one embodiment of the present disclosure, at least one second checking of at least one restricted frequency channel of said set, that has not been checked as available, is performed after said first configuring and said server comprises a memory zone adapted to store configuration data comprising an indication of availability of said checked frequency channel.

According to at least one embodiment of the present disclosure, said system comprises at least two communication network devices and said chosing is performed according to configuration data comprising indications of availability stored by several communication network devices.

According to another aspect, the present disclosure relates to a non-transitory computer readable program product.

According to at least one embodiment of the present disclosure, the non-transitory computer readable program product comprises program code instructions for performing, when said non-transitory software program is executed by a computer, a method for configuring an WLAN access point adapted to use at least one operational frequency channel to transmit or receive data when said access point is in an operational mode, said configuring comprising:
- checking an availability of at least one restricted frequency channel, a use of said restricted frequency channel being restricted by said availability;
- chosing said operational frequency channel from a set of frequency channels including said checked frequency channel, according to said checked availability;
a first checking of restricted frequency channels belonging to a first proper sub-set of said set being performed before entering into said operational mode;
at least one second checking of at least one restricted frequency channel of said set, that has not been checked as available, being performed after said first configuring.

According to another aspect, the present disclosure relates to a computer readable storage medium carrying a software program.

According to at least one embodiment of the present disclosure, said computer readable storage medium carrying a software program comprises program code instructions for performing, when said non-transitory software program is executed by a computer, a method for configuring an WLAN access point adapted to use at least one operational frequency channel to transmit or receive data when said access point is in an operational mode, said configuring comprising:
- checking an availability of at least one restricted frequency channel, a use of said restricted frequency channel being restricted by said availability;
- chosing said operational frequency channel from a set of frequency channels including said checked frequency channel, according to said checked availability;
a first configuring comprising a first checking of restricted frequency channels belonging to a first proper sub-set of said set being performed before entering into said operational mode;
at least one second checking of at least one restricted frequency channel of said set, that has not been checked as available, being performed after said first configuring.

According to another aspect, the present disclosure relates to a method for configuring an WLAN access point adapted to use at least one operational frequency channel, selected (or in other words chosen) from a set of frequency channels, for transmitting or receiving data when said access point is in an operational mode, a use of at least one of said frequency channels, called restricted frequency channel, being restricted by an availability of said restricted frequency channel, said configuring comprising:
- checking an availability of at least one of said restricted frequency channels;
- storing, for instance in a persistent memory zone, configuration data comprising an indication of availability of said checked frequency channel;
- selecting (or in other word chosing) said operational frequency channel from said set of frequency channels according to said indication of availability;
a first configuring being performed before entering into said operational mode on a first sub-set of said set of frequency channels, said first sub-set being included in and different from said set.

According to an embodiment of the present disclosure, at least one second configuring is performed on at least one second sub-set of said set, comprising at least one frequency channel not included in said first sub-set when said access point is not transmitting and/or receiving data.

For instance, the second configuring can be performed when none of said frequency channels of said first sub-set is used by said access point.

According to an embodiment of the present disclosure, said first configuring is performed during a first boot of the access point in a first location.

The second configuring can be performed after the first configuring, for instance after another boot of the device, or when the device is in a maintenance mode.

According to an embodiment of the present disclosure, said first and/or second configuring comprises storing localization information related to the current location of said WLAN access point at the time of said checking.

According to an embodiment of the present disclosure, said first configuring is performed when a localization information deduced from a current location of the access point is different from said stored localization information.

According to an embodiment of the present disclosure, said second configuring is performed a plurality of times (e.g. periodically (for instance each night)).

According to an embodiment of the present disclosure, said WLAN access point is a dual band non concurrent WIFI access point.

According to an embodiment of the present disclosure, said first and/or second checking of a restricted frequency channel comprise detecting a current use of said frequency restricted channel by a radar.

According to an embodiment of the present disclosure, wherein when at least one indication of availability is representative of an availability of a frequency channel, the selecting comprises selecting at least one of said available frequency channels.

According to an embodiment of the present disclosure, said selecting takes into account the frequency band of said frequency channels.

According to an embodiment of the present disclosure, said first configuring and/or said second configuring comprise storing a timestamp representative of the time of said checking when the checked frequency channel is not available.

According to an embodiment of the present disclosure, said configuration data is stored in a memory zone is located on said WLAN access point.

According to an embodiment of the present disclosure, said configuration data is stored in a memory zone comprised a nonvolatile memory located in a device distinct from [or separate from] said WLAN access point.

According to an embodiment of the present disclosure, said persistent memory zone is located a device distinct from said WLAN access point and said selecting is performed according to indications of availability stored by several access points.

According to an embodiment of the present disclosure, when a radar is detected in a restricted frequency channel, said method comprise storing a timestamp representative of the time of the detection.

According to an embodiment of the present disclosure, the selecting can comprise varying a number of operational frequency channels according to said indication of availability.

According to an embodiment of the present disclosure, said WLAN comprises a WIFI network.

According to another aspect, the present disclosure relates to a communication network device comprising at least one processor configured for configuring an WLAN access point adapted to use at least one operational frequency channel, selected from a set of frequency channels, for transmitting or receiving data when said access point is in an operational mode, a use of at least one of said frequency channels, called restricted frequency channel, being restricted by an availability of said restricted frequency channel, said configuring comprising:
- checking an availability of at least one of said restricted frequency channels;
- storing configuration data comprising an indication of availability of said checked frequency channel;
- selecting (or in other word chosing) said operational frequency channel from said set of frequency channels according to said indication of availability;
a first configuring being performed before entering into said operational mode on a first sub-set of said set of frequency channels, said first sub-set being included in and different from said set.

According to an embodiment of the present disclosure, at least one second configuring is performed on at least one second sub-set of said set, comprising at least one frequency channel not included in said first sub-set
when said access point is not transmitting and/or receiving data.

For instance, the second configuring can be performed when none of said frequency channels of said first sub-set is used by said access point.

While not explicitly described, the communication network device of the present disclosure can be adapted to perform the configuring method of the present disclosure in any of its embodiments.

According to another aspect, the present disclosure relates to a communication network system comprising a server and at least one communication network device, said at least one communication network device comprising at least one processor configured for configuring an WLAN access point adapted to use at least one operational frequency channel, selected (or in other word chosen) from a set of frequency channels, for transmitting or receiving data when said access point is in an operational mode, a use of at least one of said frequency channels, called restricted frequency channel, being restricted by an availability of said restricted frequency channel, said configuring comprising :
- checking an availability of at least one of said restricted frequency channels;
- storing configuration data comprising an indication of availability of said checked frequency channel;
- selecting (or in other word chosing) said operational frequency channel from said set of frequency channels according to said indication of availability;
a first configuring being performed before entering into said operational mode on a first sub-set of said set of frequency channels, said first sub-set being included in and different from said set.

According to an embodiment of the present disclosure, at least one second configuring is performed on at least one second sub-set of said set, comprising at least one frequency channel not included in said first sub-set when said access point is not transmitting and/or receiving data and said indication of availability is stored by said server.

For instance, the second configuring can be performed when none of said frequency channels of said first sub-set is used by said access point.

While not explicitly described, the communication network system of the present disclosure can be adapted to perform the configuring method of the present disclosure in any of its embodiments.

While not explicitly described, the present embodiments related to a configuring method or to the corresponding communication network device or system can be employed in any combination or sub-combination. For example, some embodiments can involve a communication device comprising a dual band non concurrent WIFI access point, said first and/or second configuring comprises storing localization information related to the current location of said WLAN access point at the time of said checking and the processor is configured for storing a timestamp representative of the time of a detection of a radar in a restricted frequency channel.

According to another aspect, the present disclosure relates to a non-transitory program storage device, readable by a computer.

According to an embodiment of the present disclosure, said non-transitory computer readable program product tangibly embodies a program of instructions executable by a computer to perform the method described above, in any of its embodiments.

Notably, according to an embodiment of the present disclosure, said disclosure relates to a non-transitory computer readable program product comprising program code instructions for performing, when said non-transitory software program is executed by a computer, a method for configuring an WLAN access point adapted to use at least one operational frequency channel, selected from a set of frequency channels, for transmitting or receiving data when said access point is in an operational mode, a use of at least one of said frequency channels, called restricted frequency channel, being restricted by an availability of said restricted channel, said configuring comprising :
- checking an availability of at least one of said restricted frequency channels;
- storing configuration data comprising an indication of availability of said checked frequency channel;
- selecting (or in other word chosing) said operational frequency channel from said set of frequency channels according to said indication of availability;
a first configuring being performed before entering into said operational mode on a first sub-set of said set of frequency channels, said first sub-set being included in and different from said set.

According to an embodiment of the present disclosure, at least one second configuring is performed on at least one second sub-set of said set, comprising at least one frequency channel not included in said first sub-set when said access point is not transmitting and/or receiving data. For instance, said second configuring can be performed when none of said frequency channels of said first sub-set is used by said access point.

According to another aspect, the present disclosure relates to a computer readable storage medium carrying a software program comprising program code instructions for performing the method of the present disclosure, in any of its embodiments, when said non transitory software program is executed by a computer.

Notably, according to an embodiment of the present disclosure, said disclosure relates to a computer readable storage medium carrying a software program comprising program code instructions for performing, when said non-transitory software program is executed by a computer, a method for configuring an WLAN access point adapted to use at least one operational frequency channel, selected from a set of frequency channels, for transmitting or receiving data when said access point is in an operational mode, a use of at least one of said frequency channels, called restricted frequency channel, being restricted by an availability of said restricted frequency channel, said configuring comprising :
- checking an availability of at least one of said restricted frequency channels;
- storing configuration data comprising an indication of availability of said checked frequency channel;
- selecting (or in other word chosing) said operational frequency channel from said set of frequency channels according to said indication of availability;
a first configuring being performed before entering into said operational mode on a first sub-set of said set of frequency channels, said first sub-set being included in and different from said set.

According to an embodiment of the present disclosure, at least one second configuring is performed on at least one second sub-set of said set, comprising at least one frequency channel not included in said first sub-set when said access point is not transmitting and/or receiving data. For instance, said second configuring can be performed when none of said frequency channels of said first sub-set is used by said access point.

As will be appreciated by one skilled in the art, aspects of the present disclosure can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", module" or "system". Furthermore, aspects of the present disclosure can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present disclosure can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

### 4. List of drawings.

The present disclosure will be better understood, and other specific features and advantages will emerge upon reading the following description, the description making reference to the annexed drawings wherein:
- Figure 1 shows an example of a frequency spectrum usable by a wireless communication network device according to a particular embodiment of the present disclosure;
- Figure 2 is a functional diagram that illustrates a particular embodiment of a configuring method of the present disclosure;
- Figure 3 illustrates a communication network device adapted to at least one particular embodiment of the present disclosure.

It is to be noted that the drawings have only an illustration purpose and that the embodiments of the present disclosure are not limited to the illustrated embodiments.

### 5. Detailed description of the embodiments.

At least one embodiment of the present disclosure offers a new way of configuring a wireless device adapted to use at least one DFS channel. Notably, at least one embodiment of the present disclosure offers a new way of clearing frequency channels subject to DFS constraint.

It can be of interest, for a communication network device that is adapted to operate in a DFS channel, to clear DFS frequency channels in advance in order to be able to use an alternate channel in case of radar detection in the frequency channel actually in use when the device is operating.

However, because of the minimum scanning time requirement by a DFS algorithm, there is a risk for a device that performs sequentially (in advance) a scan of all frequency channels it is adapted to use, not to reach a user's expectation in terms of response time and thus to be perceived by a user as a very slow device, being of poor quality.

At least some embodiments of the present disclosure proposes to perform a first and a second configuring, the first configuring being performed at the first boot at a given location of the device and the second configuring being performed later. During the first configuring, checking is performed only on a sub-set of the DFS frequency channels until the number of the available frequency channels needed by the device in operational mode, plus some fallback channels, has been reached.

The clearing of the remaining DFS frequency channels (either not yet checked, either checked as unsuable) can be performed during at least one second configuring.

According to at least one embodiment of the present disclosure (like embodiments where enough non restricted channels can be used as fallback channels), the method can be performed without extra/specific real time scanning mechanism that would have to be embedded in the AP. Thus, at least one embodiment of the present disclosure can help limiting the Cost of goods sold (COGS) of an electronic device. Furthermore, at least one embodiment of the present disclosure can contribute to limit moments of scanning when the device is operating. Thus, the user experience can be preserved.

Indeed, with the assumption that a limited number of DFS channels checked as available (or usable) during the first configuring, will be used by radars during a time period between the first and a second configuring, a sufficient number of channels should be usable, thus permitting for a good level of operation.

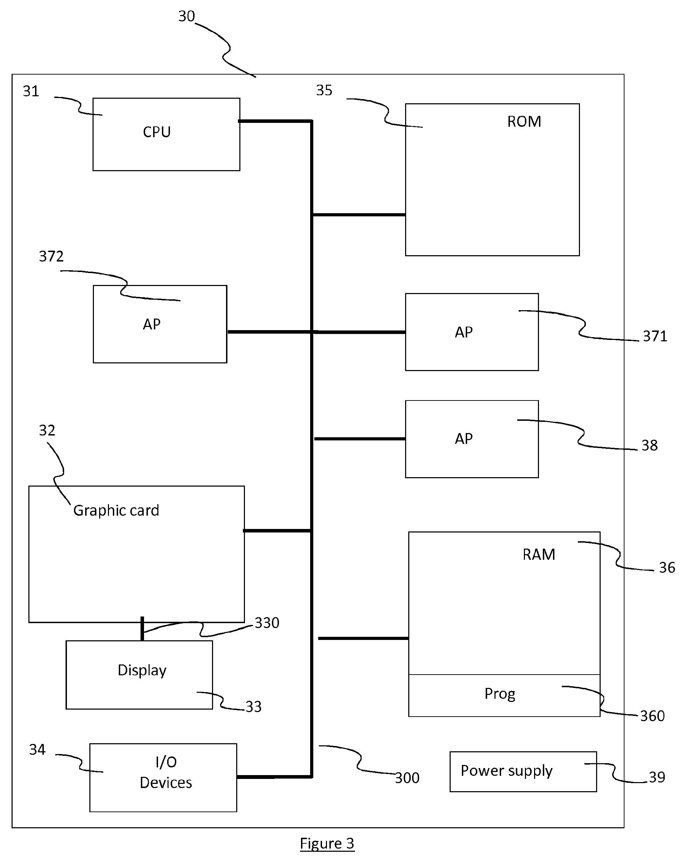

**Figure 3** describes the structure of a communication network device 30 according to at least one embodiment of the present disclosure. This device can be a Wi-Fi communication network access point.

In the particular embodiment of figure 3, the communication network device 30 can comprise the following devices, linked together via a data and address bus 300, which can also carry a timer signal:
- a micro-processor 31 (or CPU);
- a graphics card 32 (depending on embodiments, such a card may be optional);
- at least one Input/ Output module 34, (like a keyboard, a mouse, a led, and so on);
- a ROM (or « Read Only Memory ») 35 ;
- a RAM (or « Random Access Memory ») 36 (for instance a NVRAM);
- two communication interfaces 371, 372 configured for the reception and/or transmission of data, via a wireless connection (notably of type WIFI or Bluetooth®) at a first frequency;
- a wired communication interface 38;
- a power supply 39.

In some embodiments, the communication network device 30 can also comprise, or be connected to, a display module 33, for instance a screen, directly connected to the graphics card 32 by a dedicated bus 330. In a variant, the display can be external to the electronic device 30. In some embodiments, the communication network device 30 can communicate with the display 33 thanks to a wireless interface. In other embodiments, the communication network device 30 can communicate with the display thanks to a wired interface, like a cable transmitting display signals. The communication network device 30 can comprise a connector (not illustrated) or a transmitting module adapted to transmit a display signal to an external display apparatus like an LCD or plasma screen or a video projector.

Each of the mentioned memories can comprise at least one register, that is to say a memory zone of low capacity (a few binary data) or high capacity (with a capability of storage of a whole program or of all or part of data representative of data to be calculated or displayed).

When the communication network device is powered on, the microprocessor 31 loads the program instructions 360 in a register of the RAM 36, notably the processes needed for performing at least one embodiment of the configuring method described herein, and executes the program instructions.

According to a variant, the communication network device 30 comprises several microprocessors.

According to another variant, the power supply 39 is external to the communication network device 30.

In the particular embodiment illustrated in figure 3, the microprocessor 31 can configure an WLAN access point adapted to use at least one operational frequency channel to transmit or receive data when the access point is in an operational mode, configuring the WLAN access point comprising:
- checking an availability of at least one restricted frequency channel, a use of the restricted frequency channel being restricted by the availability;
- chosing the operational frequency channel from a set of frequency channels including the checked frequency channel, according to the checked availability;
- a first configuring comprising a first checking of restricted frequency channels belonging to a first proper sub-set of said set being performed before entering into the operational mode;
the device being characterized in that at least one second checking of at least one restricted frequency channel of the set, that has not been checked as available, is performed after the first configuring.

In the particular embodiment illustrated in figure 3, the microprocessor 31 can be configured for configuring an WLAN access point adapted to use at least one operational frequency channel, selected from a set of frequency channels, for transmitting or receiving data when the access point is in an operational mode, a use of at least one of the frequency channels, called restricted frequency channel, being restricted by an availability of the restricted frequency channel, the configuring comprising:
- checking an availability of at least one of the restricted frequency channel(s);
- storing configuration data comprising an indication(s) of availability of the checked frequency channel (s);
- selecting (or in other words chosing) the operational frequency channel from the set of frequency channels according to the indication(s) of availability;
a first configuring being performed before entering into the operational mode on a first sub-set of the set of frequency channels, said first sub-set being a proper subset of said set (that is to say the the first sub-set being included in and different (or in othe word distinct) from the set); and
at least one second configuring being performed on at least one second sub-set of the set, comprising at least one frequency channel not included in said first sub-set when said access point is not transmitting and/or receiving data.

For instance, the second configuring can be performed when none of the frequency channels of the first sub-set is used by the access point.

In the illustrated embodiment, the communication network device is a Wi-Fi device, more precisely a dual band Access Point device. One skilled in the art can appreciate that the techniques disclosed herein can also be applied when more than two bands of operating frequencies are utilized.

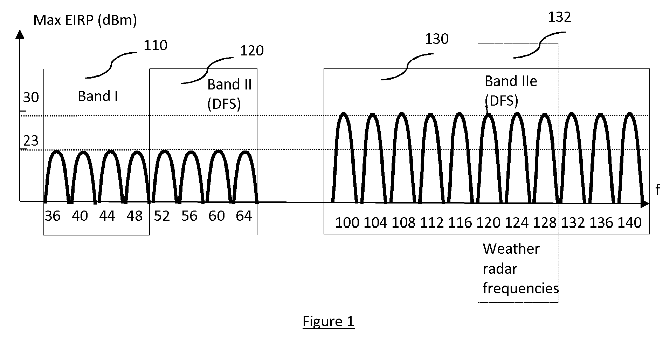

In the detailed embodiment of **figure 1a**, the communication network device can operate in several frequency bands, named herein "Band I" 110, "Band II" 120 and "Band IIe" 130. Of course, figure 1A is only illustrative. For clarity, some channels of a band may have been omitted in the illustration.

"Band I" 110 is directly usable without DFS scanning. The Maximum Equivalent Isotropically Radiated Power (EIRP) in "Band I" is around 23dBm. As "Band I" 110 can be used by non DFS Access Points, many wireless devices are configured to operate in this band. Thus, a device operating in this band may encounter problems of channel occupation.

Band II 120 provides an extended spectrum, while offering the same Maximum Equivalent Isotropically Radiated Power as the Band I 110. Band II 120 is less occupied than "Band I" 110, as a DFS mechanism needs to be implemented by the devices operating in this band. As the presence of a radar can fluctuate depending on many factors (like notably the location of the device, the activity of the radar, the location of the radar, which can also evolve in case of an embedded radar), a channel of "Band II" 120 can be sometimes available and sometimes used by a radar, thus requesting a device to interrupt exchanges on that channel.

"Band IIe" 130 allows higher Maximum Equivalent Isotropically Radiated Power (around 30dBm) but requires a DFS mechanism. A sub-band 132 of Band IIe contains channels known to be used by weather radars.

According to the DFS mechanism, a device that wants to use a DFS channel of Band II 120 or Band IIe 130, except from the band 132 used by weather radars, must first listen (or scan) the channel during a primary scanning time equal to 1 minute. Thus, if a channel represents a frequency band of 20 MHz, a device that needs frequency channels (notably contiguous frequency channels) of total size 40 MHz can have to wait during a total scanning time of 2 minutes.

If several channels are aggregated (in a resulting channel of 40, 80 or 160 MHz for instance), the total scanning time can be reduced (for instance only 1 minute for a channel of size 40 MHz). However, in case of detection of radar in an aggregate channel, extra scan need to be performed in order to determine the channel of 20 MHz where the radar is present.

In the band 132 used by weather radars, the DFS primary scanning time is even larger (like 10 minutes per channel).

When a radar is detected in a DFS channel (either in Band II or Band IIe), the DFS channel has to be left during at least 30 minutes. Furthermore, before using again the DFS channel where the radar has been detected, a primary scanning of the channel is required to be performed again.

It is to be noted that the Wi-Fi spectrum in the 5GHz band can differ amongst different countries.

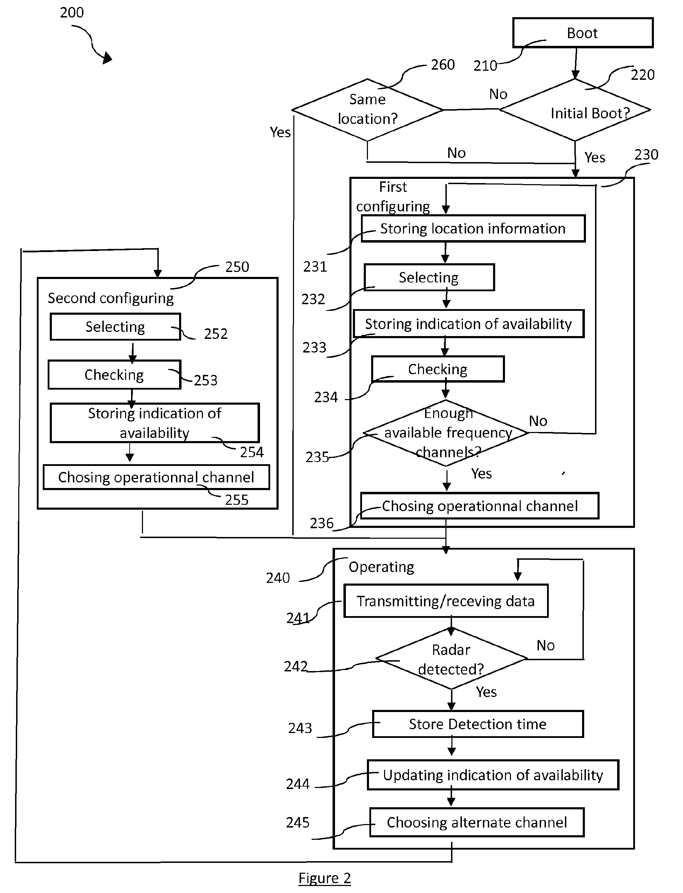

**Figure 2** shows the configuring method 200 of the present disclosure, in a particular embodiment, implemented in a communication network device 30, as illustrated by figure 3.

In the detailed embodiment, the method notably comprises a boot 210 and/or an initialization of the communication network device.

According to figure 2, the method can comprise testing if the current boot is the initial boot of the device (during or just after the device installation), and/or if the device has been moved to a new location (compared to a location information previously stored for instance). If it is the initial boot 220 or if the device is located in a new location 260, then the method comprises performing a first configuring 230.

In the illustrated embodiment, the first configuring can comprise storing 231 the current localization of the device. The current Access Point localization can be performed by identifying the public Internet Protocol (IP) address of the device, or by using Global Positioning System (GPS) information, if available. For instance, the device localization information is stored in a Non Volatile RAM (NVRAM) of the device The first configuring 230 can comprise iterative checking (or in other words clearing) 233 of channels. In the illustrated embodiment, this clearings are performed only until the number of channels needed for the device to operate normally in an operating mode, plus a backup channel is reached. For instance, if the device needs two channels of 20 MHz each, 3 channels of 20MHz can be scanned during the setup of the STB. If the device needs two pairs of channels of 20 MHz each, 3 pairs of channels of 20MHz each will be scanned during the setup of the STB. Of course, in other embodiments, a different number of back up channels can be checked.

In some embodiments, the method can comprise, prior to the checking 233, selecting 232 the channel to be checked. For instance, in some embodiments, channels located in the Band II can be scanned first. In other embodiment, channels located in Band IIe but outside the band for weather radars can be scanned first.

In some embodiments, the selecting 232 can comprise selecting at least one channel in a band with no DFS constraint (like Band I as illustrated in figure 1a). Such a selecting can be performed notably when it is not possible to get enough cleared DFS channels. It is to be noted that checking and storing can be optional for non-restricted channels (like channels of Band I).

It is to be noticed that DFS mechanism only requires a scan to be performed before the use of a DFS channel. It does not require the scan to be performed at the moment of the transmission and/or reception of data. It is permitted by regulatory and/or DFS certification authority that the scan can be done in advance. Thus, it can be possible for the device to use a frequency scanned during the first checking of the first configuring and considered as available (or in other words cleared) without performing a new scan.

The method can also comprise storing 234 an information representative of the result of the clearing. This information can be stored in at least one non-volatile memory. The stored information comprises an indication of channel availability. An indication of channel availability can permit differentiating a channel where no radar has been detected during the check (called herein a "cleared channel") from a channel that has not yet been checked (called herein "un-cleared channel") and/or a channel where a channel has been detected (called herein "occupied channel" or "unusable channel ").

Depending upon embodiments, only the status of scanned frequency channels can be stored (that is to say cleared or occupied channels) or the status of all channels (that is to say cleared, un-cleared, and occupied channels). Notably, the method can comprise storing 234 the status of all scanned channels in a non-volatile RAM, including for the occupied channels, the date and time of the detection of a radar on this frequency, and at least one localization information related to the current location of the STB at the time of the first configuring and/or the checking of the frequency. Depending upon embodiments, the memory zone can be stored locally on the device, for instance in a persistent memoy zone, or in a memory zone (like a Random Access Memory (RAM)) of another device, being either a peripheral device of the communication network device 30 or a distant server, storing indication of availability of frequency channels obtained from several communication network devices.

According to the figure 2, the selecting 232, checking 233 and storing 234 of indication of availability of a channel can be performed iteratively until the number of available channels needed (taking account of the backup channel (s)) is reached 235.

Depending on embodiments and/or occupation of the frequency bands, the available channels can include cleared channel and/or not-restricted channels.

As an example, according to the selecting, the Access Point can first start DFS scanning of 6 channels of the Band IIe (for having an EIRP of 30dBm). It represents for instance a 6 minutes duration for scanning channels 100 to 112, 132 and 136 according to figure 2.

The result of the scan can be stored in a NVRAM (for instance a local NVRAM that is also storing the location information). In the illustrated embodiment, If enough frequency channels are available 235, the method also comprises chosing 236 at least one frequency channel for its operation, according to the stored indications of availability, and operating 240 in an operational mode, with the chosen channel enabling for its operation. Notably, if contiguous frequency channels of total size, or a unique channel of size, 80MHz is/are available (like 100-104-108-112 frequencies as illustrated by figure 1 a), the chosen 80MHz can be enabled.

If not, a 40 MHz channel can enabled in the Band IIe.

If no cleared DFS channel is available in the Band IIe, then a channel in Band I can be used. It can be either a channel of size 80 or 40 MHz

The channel being currently used by the access point can also be stored in the NVRAM.

In some embodiment, during the first configuring a maximum 10 channels of 20 MHz (5 channels of 40MHz) can be checked as available:
- 4 channels always available in the Band I (23dBm)
- 6 channels available in the Band IIe (30dBm)

When the STB is operating 240 in an operating mode, the method can comprise transmitting and/or receiving data 241 on the chosen frequency channel until a radar is detected. Indeed, in normal operational mode on a DFS frequency, the Access Point can be permanently or periodically scanning the DFS frequency for detecting a radar.

If a radar is detected 242, information related to the detection is stored in the non-volatile RAM for marking the frequency as unusable (or in other word occupied or "unusable") and one of the already cleared frequencies is used as fallback frequency. The method can notably comprise storing 243 a date and time of the detection and updating 244 indication of availability of the occupied channel. The status of the occupied channel can be moved for instance to "occupied" (or "unusable"). The method then comprises choosing 245 an alternate frequency channel according to its stored indication of availability.

For instance, the alternate frequency channel can be chosen first in the band IIe (with a size of 80 MHz if it is possible, else 40 MHz for instance).

If no cleared frequency, marked as available, belongs to the band IIe, the alternate frequency can be chosen in the band II (with a size of 80MHz if it is possible, else 40 MHz for instance).

If no cleared frequency, marked as available, belongs to the band IIe or to the Band II, the alternate frequency can be chosen in the band I (with a size of 80MHz if it is possible, else 40 MHz for instance).

An indication identifying the new chosen frequency can be stored in the NVRAM.

In the illustrated embodiment, all the channels that will be marked as unavailable (or in other words occupied or unusable) in the current day due to radar detection, can be rechecked during a night clearing operation.

In the illustrated embodiment, transmitting and/or reception of data is performed only on at least one frequency channel for which stored information indicates that a scan, without any radar detection has already been performed and that no radar has been detected since the last scan in this channel.

According to figure 2, the method comprise a second configuring 250. This second configuring 250 can be performed several times, notably periodically, for instance on a daily basis (for instance every night). According to the particular embodiment of figure 2, the second configuring 250 comprises checking 253 at least one frequency channel being still un-cleared and/or being marked as unusable (or occupied). In some embodiments, all frequencies can be scanned (even the ones considered as "cleared" frequency), or all the frequencies either not yet scanned or where a radar has been previously detected since the last check, or only some of the frequency channels either not yet scanned or where a radar has been previously detected since the last check. Notably, the second configuring can comprises checking more channels than the number of operating channel(s) and backup channel(s) needed. The method can comprise, prior to the checking 253 a selecting 252 similar to the selecting 232 performed during the first configuring 230 and already detailed herein.

In the illustrated embodiment, the Access Point performs DFS scanning of all the DFS channels that have not been cleared since the boot of the device. The Access Point also performs DFS scanning of all the DFS channels that are marked as occupied (or unusable), because of a radar detection, for which no radar has been detected from the last 30 minutes. This constraint can be checked by comparing the detection time stored in association with a DFS channel with the actual time.

The time spent in checking a DFS channel can be assumed as 1 minute per 20 MHz for non-weather channel and 10 minute per 20 MHz weather channel for instance. The second configuring also comprise storing, for each checked channel, an indication of availability in the NVRAM. In some embodiments, this second configuring can be performed when it is less likely to be noticed by a user, for instance, when the STB is not transmitting or receiving data. For instance, the second configuring can be performed when none of the cleared frequency channels are used by the access point, or each night at a specific hour, or when there's a few data being transmitted and/or received, or when the transmitted and/or received data is not associated to a time constraint (like real time data). In other embodiments, the second configuring can be triggered by a specific event, like a manual action of a user and/or entering into a power safe and/or maintenance mode for instance. It can also follow another boot of the device

As a result, in some embodiments, after the second configuring, the STB will have cleared all the usable DFS channels. Thus, after the second configuring, all the channels that were not yet cleared or that were marked as unusable (due to radar detection) for more than 30 minutes before the second configuring can become available again.

In the illustrated embodiment fo figure 3, the second configuring comprises chosing 255 the operational channel to be used in the operation mode of the STB. Such an embodiment permits to chose as soons as being checked a more accurate frequency channel than the one formely used in the operational mode.

In other embodiments, the chosing 255 can be delayed, for instance until the next boot of the STB. Such an embodiment can sometimes lead to a more simpler of a processor, and thus to a cheaper device.

Is it to be noted that, even if not illustrated for clarity purpose, optional scan can be needed during the operating state, when the number of clear channels is not sufficient to permit the operating of the device. This can happen when radar are detected in several cleared channels, thus forbidding the use of those channels for a while. In such a case, the first configuring can be performed again.

In case of STB reboot 210, (thus not being the initial boot of the device), the device checks the localization information 240. If the STB has been moved to a different location (i.e. if an actual location information obtained by the Access Point differs from the stored location information), the NVRAM content can be erased and a first configuring 230 is performed.

In the illustrated embodiment, if the STB is still at its previous location, the Access Point takes into account the information stored in the NVRAM. Notably, the stored information can be used for identifying the last used 20 MHz channels (for instance 2 contiguous channels for a total size of 40 MHz, or 4 contiguous channels for a total size of 80 MHz)

For instance, the Access Point reads the NVRAM content for identifying the cleared channels (either operational or backup channels) and starts Wi-Fi operation 240 with according to the availability indication stored in the NVRAM.

The present disclosure has been described in relation to a WIFI communication network device and//or system.

Of course, as it will be understandable for a person skilled in the art, the present disclosure may also been applied in wireless distribution system using other network protocols, notably network protocols with acknowledgment of frames, like WIFI, WiMAX, or Bluetooth protocols.

## Claims

1. A method for configuring an WLAN access point adapted to use at least one operational frequency channel to transmit or receive data when said access point is in an operational mode, said configuring comprising:
- checking an availability of at least one restricted frequency channel, a use of said restricted frequency channel being restricted by said availability;
- chosing said operational frequency channel from a set of frequency channels including said checked frequency channel, according to said checked availability; a first configuring comprising a first checking of restricted frequency channels belonging to a first proper sub-set of said set being performed before entering into said operational mode;
said method being **characterized in that** at least one second checking of at least one restricted frequency channel of said set, that has not been checked as available, is performed after said first configuring.

2. The method of claim 1 wherein said first configuring is performed during a first boot of the access point in a location.

3. The method of claim 1 or 2 wherein at least one of said second checking is performed for all not already checked frequency channels of said set.

4. The method of claim 1 or 2 wherein a use of a restricted frequency channel checked as as unusuable has to be left for a duration and wherein at least one of said second checking is performed for all restricted frequency channels of said set which use is not forbidden at the time of said second checking.

5. The method of any of claims 1 to 4 wherein said method comprises storing localization information related to the current location of said WLAN access point at the time of said first and/or second checking.

6. The method of claim 5 wherein said first configuring is performed when a localization information deduced from a current location of the access point is different from said stored localization information.

7. The method of any of claims 1 to 6 wherein said method comprises storing a timestamp representative of the time of said first and/or second checking when the checked frequency channel is not available.

8. The method of any of claims 1 to 7 wherein the chosing comprises varying a number of operational frequency channels according to said indication of availability.

9. A communication network device comprising at least one processor configuring an WLAN access point adapted to use at least one operational frequency channel to transmit or receive data when said access point is in an operational mode, said configuring comprising:
- checking an availability of at least one restricted frequency channel, a use of said restricted frequency channel being restricted by said availability;
- chosing said operational frequency channel from a set of frequency channels including said checked frequency channel, according to said checked availability; a first configuring comprising a first checking of restricted frequency channels belonging to a first proper sub-set of said set being performed before entering into said operational mode;
said device being **characterized in that** at least one second checking of at least one restricted frequency channel of said set, that has not been checked as available, is performed after said first configuring.

10. The device of claim 9 wherein said device comprises a memory zone adapted to store configuration data comprising an indication of availability of said checked frequency channel.

11. The device of claim 9 or 10 wherein said configuration data is stored in a memory zone located in a device distinct from said communication network device.

12. Communication network system comprising a server and at least one communication network device, said at least one communication network device comprising at least one processor configuring an WLAN access point adapted to use at least one operational frequency channel to transmit or receive data when said access point is in an operational mode, said configuring comprising :
- checking an availability of at least one restricted frequency channel, a use of said restricted frequency channel being restricted by said availability;
- chosing said operational frequency channel from a set of frequency channels including said checked frequency channel, according to said checked availability; a first configuring comprising a first checking of restricted frequency channels belonging to a first proper sub-set of said set being performed before entering into said operational mode;
said system being **characterized in that** at least one second checking of at least one restricted frequency channel of said set, that has not been checked as available, is performed after said first configuring and
**in that** said server comprises a memory zone adapted to store configuration data comprising an indication of availability of said checked frequency channel.

13. The system of claim 12 wherein said system comprises at least two communication network devices and wherein said chosing is performed according to configuration data comprising indications of availability stored by several communication network devices.

14. A non-transitory computer readable program product, **characterized in that** it comprises program code instructions for performing, when said non-transitory software program is executed by a computer, a method for configuring an WLAN access point adapted to use at least one operational frequency channel to transmit or receive data when said access point is in an operational mode, said configuring comprising:
- checking an availability of at least one restricted frequency channel, a use of said restricted frequency channel being restricted by said availability;
- chosing said operational frequency channel from a set of frequency channels including said checked frequency channel, according to said checked availability; a first configuring comprising a first checking of restricted frequency channels belonging to a first proper sub-set of said set being performed before entering into said operational mode;
at least one second checking of at least one restricted frequency channel of said set, that has not been checked as available, being performed after said first configuring.

15. Computer readable storage medium carrying a software program **characterized in that** it comprises program code instructions for performing, when said non-transitory software program is executed by a computer, a method for configuring an WLAN access point adapted to use at least one operational frequency channel to transmit or receive data when said access point is in an operational mode, said configuring comprising:
- checking an availability of at least one restricted frequency channel, a use of said restricted frequency channel being restricted by said availability;
- chosing said operational frequency channel from a set of frequency channels including said checked frequency channel, according to said checked availability; a first configuring comprising a first checking of restricted frequency channels belonging to a first proper sub-set of said set being performed before entering into said operational mode;
at least one second checking of at least one restricted frequency channel of said set, that has not been checked as available, being performed after said first configuring.
